# EUROPEAN PATENT SPECIFICATION

(11) **EP 2 685 026 B1**
(45) Date of publication and mention of the grant of the patent: **06.12.2017**
(21) Application number: 13176262.7
(22) Date of filing: 12.07.2013
(51) Int. Cl.: E04F 13/08, E04F 13/18, B29C 51/08, B29C 51/10

(54) **Improved surface covering**
Verbesserte Oberflächenbeschichtung
Revêtement de surface amélioré

(30) Priority: 12.07.2012 GB 201212379
(43) Date of publication of application: 15.01.2014
(73) Proprietor: Hygenic (Clad & Clean) Ltd, Bradford, Yorkshire BD4 9SW (GB)
(72) Inventor: Ryan, Geoffrey, Bradford, Yorkshire BD4 9SW (GB)
(74) Representative: Appleyard Lees IP LLP

(56) References cited:
- EP-A2- 2 634 325
- WO-A2-2009/050476
- US-A- 5 142 836
- US-A1- 2008 148 665

## Description

### FIELD OF INVENTION

The invention relates to a surface covering for covering a surface of a commercial or domestic property. The closest prior art, US 5 142 836, discloses a surface covering according to the preamble of claim 1.

### BACKGROUND OF THE INVENTION

Walls in environments such as commercial kitchens, and other areas where strict levels of hygiene are required, are often covered with non-porous materials such as tiles which are fixed in place by means of adhesive with grouting between tiles. A disadvantage with a tiled a surface it that the tiles are expensive and are time consuming to install. Furthermore, if an area of the tiled surface behind the tiles requires access, the tiles are difficult to remove without damaging them. Yet further, the tiles and surrounding grout are not flexible. This can cause gaps to appear when natural movement of the walls and substrate which the tile is fixed to occurs. The gaps harbour bacteria, and as such, can cause the tiled surface to become non-compliant with hygiene standards.

To solve the above problem it is known to use plastic panels to cover walls which are flat finished. The plastic panels are sufficiently large that they cover a region that would otherwise comprise a large number of tiles. The plastic panels are desirable since they are relatively cheap to produce, and can be relatively fast and easy to install. A further advantage is that they are easier to wipe clean than the tiled surface. Yet further, due to the nature of the material, the panels can expand and contract without cracking which would otherwise compromise hygiene. However, such plastic panels are not aesthetically pleasing when compared to a tiled surface.

An object of the present invention is to solve one of the above or other problems. More specially, an object of the present invention is to provide a surface covering which has both the advantages of a tiled and plastic panel.

### SUMMARY OF THE INVENTION

According to a first aspect of the present invention there is provided a surface covering, the surface covering comprising a plastics based material, and a plurality of channels, the channels being arranged such that the surface covering has a tiled appearance.

Preferably, the channels are positioned on an outer surface of the surface covering.

Accordingly, the first objective is solved since the surface covering is plastic and is therefore relatively cheap to manufacture. Furthermore, when installed it provides the appearance of a tiled surface without the drawback of requiring a time consuming installation.

Preferably, the channels comprise first and second portions which are arranged to be substantially perpendicular to each other and which preferably bisect each other. Preferably, the channels are between 2mm to 20mm in a width direction. More preferably the channels are 2mm to 10mm in a width direction. Preferably, the channels are between 2mm to 20mm in a depth direction. More preferably the channels are between 2mm to 10mm in a depth direction. Preferably, the channels comprise a surface finish which gives the appearance of a tile grouting. Preferably, the surface finish is comparable in roughness to tile grouting.

Preferably, the channels are arranged to define tile regions. Preferably the tile regions are 50 - 400 mm in side length and are preferably substantially square. More preferably the tile regions are 50 - 200mm in side length. Preferably, the tile regions comprise a surface finish which gives the appearance of tiles. Preferably, the surface finish is comparable in smoothness to a conventional tile. Preferably, the surface finish is embossed or substantially flat.

Preferably, the channels are arranged such that the surface covering, when positioned next to an adjacent surface covering, gives the appearance of a continuously tiled surface.

Preferably, the channels comprise a surface finish which is difference to a surface finish of the tile regions.

Preferably, the channels are formed by a mould, which the surface panel is placed into. According to the invention, the surface covering comprises fixing means suitable for fixing surface covering to a wall or other substrate.

Optionally, the fixing means are positioned on an inner surface of the surface covering. Optionally, the fixing means comprises an adhesive strip. According to the invention, the fixing means comprise at least one outwardly extending protrusion. Preferably the or each protrusion is formed opposite the channel. Preferably, the or each protrusion protrudes outward to the same extent as the indentation of the channel. Preferably, the material displaced to form the channels is used to form the protrusions.

Preferably, the surface covering is substantially planar. Preferably, the surface covering is formed from a single piece of material. Preferably, the single piece for material is substantially homogenous. Preferably, the surface covering is formed by extrusion and preferably thereafter by vacuum forming. Preferably, the surface covering is formed by a further process of cutting.

Preferably, the surface covering is between 0.5 - 5 metres in width and 1 - 10 meters in length. According to the invention, the surface covering is made from an extruded PVC which is suitable for vacuum moulding and preferably extrusion. Preferably, the PVC is un-plasticised, and is preferably in accordance to certification standard DIN EN ISO 1163-1.

Preferably, the material of the surface covering comprises an impact modifier additive. Preferably, the impact modifier additive comprises a Chlorinated Polyethelene or an acrylic additive or the like.

Preferably, the material of the surface covering comprises a colouring additive. Preferably, the colouring additive is a liquid or powder pigment or the like.

Preferably, the material of the surface covering comprises a sliding additive which is preferably oil based or the like. Preferably, the sliding additive acts to improve part of an extrusion process for forming the covering.

Preferably, the material of the surface covering comprises a food safe additive. Preferably, the food safe additive is based on tin or Calcium Zinc or the like. According to the invention, the material of the surface covering comprises a fire retardant additive. Preferably, the fire retardant additive comprises Antimony Trioxide or the like.

Preferably, the surface covering comprises a micro-bacterial additive. Preferably, the micro-bacterial additive comprises an inorganic silver in the form of silver ions or the like. Preferably, the micro-bacterial additive is added to the material of the surface covering during the extrusion stage, preferably in varying concentrations dependant on the performance requirement of the surface covering.

Preferably, the material of the surface panel is compliant with certification standard EU regulation 10/2011.

Preferably, the material of the surface panel is compliant with fire safety standard BS476: Part 7:1987 Class 1 and BS476: Part 7 + 6: 1991 Class O and equivalent EU Standards.

Preferably, the surface covering is 1 mm to 10mm thick. More preferably the surface covering is 2mm to 2.5mm thick.

Preferably, the surface covering is a wall covering.

According to a further aspect of the present invention there is provided a method of forming a surface covering, the method comprising:
vacuum forming a plastic based material to include a plurality of channels, the channels being arranged such that the surface covering has a tiled appearance.

Preferably, the surface covering is configured such that a plurality of surface coverings can be assembled to form a panel. Advantageously a plurality of surface coverings can be assembled, for instance on a substrate cut to the correct size and fitted to a wall.

Preferably, the method includes a step of extruding the plastics based material. Preferably, the step of extruding the plastics based material includes adding one or more additives to the plastics based material.

Preferably, the method includes a step of forming one or more protrusions preferably opposite to the channels, wherein the protrusions are configured to aid fixing of the panel to a wall or substrate. Preferably, the method includes a step of pushing material which has been displaced to form the channels through to thereby form the protrusions.

Preferably, the step of vacuum forming includes a step of heating the plastic based material to a forming temperature which is suitable for vacuum moulding.

Preferably, the mould used for vacuum forming is formed from an imprint taken from a surface which is tiled and grouted or an equivalent surface configured to emulate a tiled and grouted surface.

Preferably, the method includes a step of cutting the surface covering to the required size.

Preferably, the method comprises fixing a plurality of surface coverings to the surface, or to the surface via a substrate. Preferably, the plurality of surface coverings are fixed to be staggered with respect to each other.

According to a further aspect of the invention there is provided a method of covering a surface, the method comprising a step of fixing a surface covering to the surface wherein the surface covering comprises a plastics based material, and a plurality of channels, the channels being arranged such that the surface covering has a tiled appearance.

Preferably, the surface is a wall or substrate of a commercial or domestic property.

All of the features described herein may be combined with any of the above aspects, in any combination, as defined by the appended claims.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 shows a plan view of a surface covering according to a first embodiment of the invention;
Figure 2 shows a perspective view of the surface covering of figure 1;
Figure 3 shows a side view of the surface covering of figure 1, and in particular shows the surface panel during cutting;
Figure 4 shows the process of manufacturing the surface panel of figure 1.

### DETAILED DESCRIPTION OF THE EXEMPLARY EMBODIMENTS

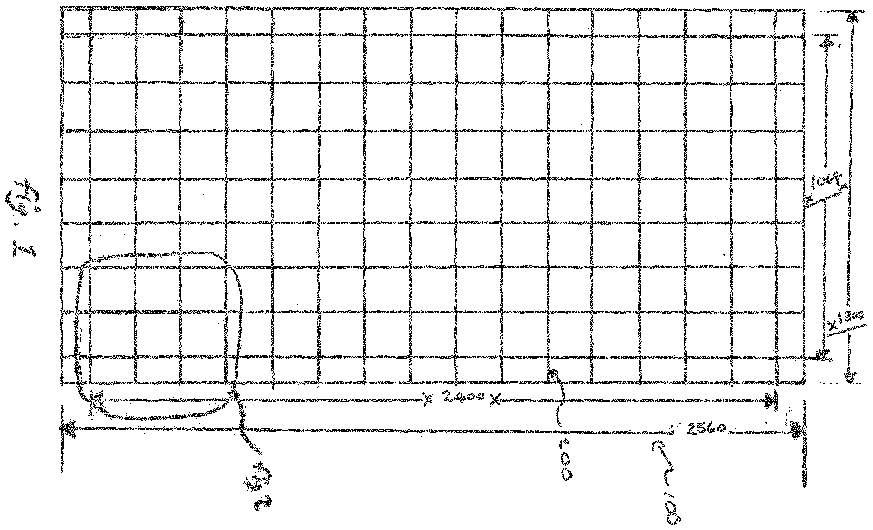

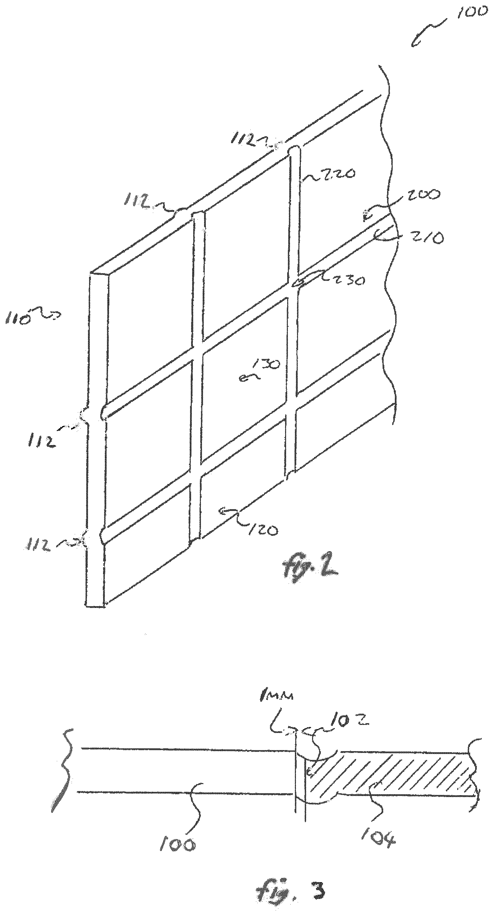

Figures 1 and 2 show a surface panel 100, which comprises channels 200. The channels comprise first 210 portions which extend in a horizontal direction and second portions 220 which extend in a vertical direction. Hence the first portions and second portions are arranged substantially perpendicular to each other and bisect each other at a plurality of intersection points 230.

With reference to figure 1, in the surfaced panel is shown before it has been cut to size, hence it in this particular embodiment it is 2.560 meters x 1.3 meters in length and width respectively. The cut size of the surface panel 100 is 2.4 meters x 1.064 meters in length and width respectively.

In this embodiment the channels 200 are substantially 'U' shaped in cross section. The channels are smooth and are 3mm in width and 3mm in depth, however in other embodiments they may range from between 2mm to 20mm in width, and between 0.25mm to 10mm in depth. The channels 200 are arranged to define tile regions 130, which in this embodiment are 147mm in length and are substantially square, and will be discussed in more detail below.

Accordingly, the channels are arranged such that the surface covering has a tiled appearance. In this embodiment the channels are formed to be smooth, and do not extend substantially though the thickness of the panel 100. In this way, they are easy to clean and are less likely to harbour dirt, bacteria or other un-hygienic substances. Furthermore, the surface panel 100 is unbroken, such that it is able to provide a sealed surface with respect to the wall or substrate which it is mounted on.

The surface panel further comprises an inner surface 110 and an outer surface 120. As shown in figure 2 the channels 200 are positioned on the outer surface 120. The inner surface 110 comprises outwardly extending protrusions 112, which are configured to provide an uneven surface to aid adhesion of the surface panel 100 onto a wall or substrate, hence the protrusions 112 provide fixing means 300. In this embodiment the protrusions 112 are formed opposite the channels and protrude to the same extent the channels 200 are indented. Advantageously, the material displaced in the formation of the channels 200 can be used to form the protrusions 112. However, it will be appreciated that in other embodiments the protrusions are not required to be opposite the channels.

The channels 200 are arranged such that they give the appearance of a region which that comprise tile grouting. The surface panel 100 comprises tile regions 130, which extend adjacent the channels.

In this embodiment the surface finish of the channels 200 is smooth relative to conventional grouting, however the indentation of the channel retains the general appearance of tile grouting. The surface finish of the tile regions 130 is also smooth which gives the appearance of tiles. Accordingly, the above smooth surface finishes are advantageous since they are easy to clean.

However, in other embodiment the surface finish of the channels and / or tile regions may be relatively rough, for instance, the same as would be achieved by grouting to provide a more conventional finish if required.

According to one embodiment the surface covering comprises additional fixing means (not shown) suitable for fixing surface covering to a wall. The fixing means are positioned on an inner surface 110 of the surface covering. In this embodiment the fixing means comprises an adhesive strip. The particular adhesive may be varied to suit the wall or substrate which the surface panel 100 is fixed to.

The surface covering 100 is formed from a single piece of material, which in this embodiment is PVCu, which has been extruded and is suitable for vacuum moulding. To form the surface covering 100 initially the material is extruded into a panel by known means.

According to one embodiment various additives may be added to the PCVu mixture prior to extrusion. For instance, a micro-bacterial additive is added to the PVCu, which contains silver ions. A fire resistance improving additive may also be added to the PVCu, which contains Antimont Trioxide or similar approved substance, which is added to the self-extinguishing Polyvinyl Chloride mixture prior to extrusion.

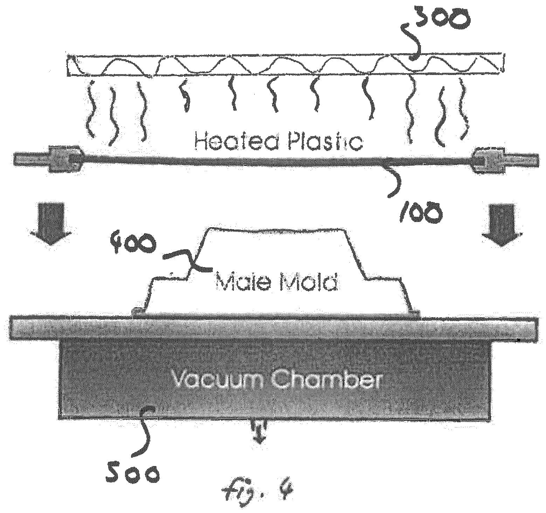

As shown in figure 4, following extrusion the surface panel 100 is heated by a heater 300 to a forming temperature, stretched onto or into a single-surface mould 400, and held against the mould by applying a vacuum between the mould surface and the panel using a vacuum chamber 500. The mould comprises protrusions configured to imprint the required configuration of channels 200 into the surface of the panel. In this embodiment the configuration of the protrusions of the mould is derived by an imprint from an actual tiled surface. In this embodiment the imprinting of the channels 200 causes the material of the surface panel to displace such that the protrusions 112 are pushed out on the other side of the panel. In other embodiments the protrusions 112 are formed by a separate mould. Thereafter, the surface covering is allowed to cool to ambient temperature and is removed from the mould and cut to the required size.

The surface panel 100 is initially sized to fit the vacuum mould apparatus. After moulding is complete it is cut, along cut line 102 to the required size as shown in figure 3. Accordingly, the waste material 104 is discarded and may be recycled for future use.

In this embodiment the surface covering is 2.5mm thick and is supplied for use in sheet form. The sheets are sized to fit the particular surface to be covered, for instance they are 2m x 5m or 1 m x 10m.

The invention is not restricted to the details of the foregoing embodiment(s).

## Claims

1. A surface covering (100), the surface covering (100) comprising a plastics based material, and a plurality of channels (200), the channels (200) being arranged such that the surface covering (100) has a tiled appearance, and the surface covering (100) further comprising fixing means (300) suitable for fixing the surface covering (100) to a wall or other substrate, the fixing means (300) comprising at least one outwardly extending protrusion (112), **characterised in that** the surface covering is made from an extruded PVC and comprises a fire retardant additive.

2. A surface covering (100) according to claim 1, wherein the channels (200) are positioned on an outer surface (120) of the surface covering (100).

3. A surface covering (100) according to claims 1 or 2, wherein the channels (200) comprise first (210) and second portions (220) which are arranged to be substantially perpendicular to each other and which preferably bisect each other.

4. A surface covering (100) according to any preceding claim, wherein the channels (200) are between 2mm to 20mm in a width direction.

5. A surface covering (100) according to any preceding claim, wherein the channels (200) are between 2mm to 20mm in a depth direction.

6. A surface covering (100) according to any preceding claim, wherein the channels (200) comprise a surface finish which gives the appearance of a tile grouting.

7. A surface covering (100) according to any preceding claim, wherein the channels (200) are arranged to define tile regions (130).

8. A surface covering (100) according to claim 7, wherein the tile regions (130) are 50 - 400 mm in side length and are preferably substantially square.

9. A surface covering (100) according to any of claims 7 or 8, wherein the tile regions (130) comprise a surface finish which gives the appearance of tiles.

10. A surface covering (100) according to any preceding claim, wherein the channels (200) are arranged such that the surface covering (100), when positioned next to an adjacent surface covering (100), gives the appearance of a continuously tiled surface.

11. A surface covering (100) according to any of claims 7 to 10, wherein the channels (200) comprise a surface finish which is difference to a surface finish of the tile regions (130).

12. A method of forming a surface covering (100), the method comprising:
vacuum forming a plastic based material to include a plurality of channels (200), the channels (200) being arranged such that the surface covering (100) has a tiled appearance and the surface covering (100) further comprising fixing means (300) suitable for fixing the surface covering (100) to a wall or other substrate, **characterised in that** the fixing means (300) comprises at least one outwardly extending protrusion (112), and wherein the surface covering is made from an extruded PVC and comprises a fire retardant additive.

13. A method of forming a surface covering (100) according to claim 12 wherein the mould (400) used for vacuum forming is formed from an imprint taken from a surface which is tiled and grouted or an equivalent surface configured to emulate a tiled and grouted surface.

14. A method of covering a surface, the method comprising a step of fixing a surface covering (100) according to claim 1 to the surface.

## Patentansprüche

1. Oberflächenverkleidung (100), wobei die Oberflächenverkleidung (100) ein auf Kunststoff basierendes Material und eine Vielzahl an Kanälen (200) umfasst, wobei die Kanäle (200) derart angeordnet sind, dass die Oberflächenverkleidung (100) ein gekacheltes Erscheinungsbild aufweist, und wobei die Oberflächenverkleidung (100) weiterhin ein Befestigungsmittel (300) umfasst, das geeignet ist, um die Oberflächenverkleidung (100) an einer Wand oder anderem Trägermaterial zu befestigen, wobei das Befestigungsmittel (300) wenigstens einen auswärts hervorstehenden Vorsprung (112) aufweist, **dadurch gekennzeichnet, dass** die Oberflächenverkleidung aus einem stranggepressten Polyvinylchlorid hergestellt ist und einen feuerhemmenden Zusatzstoff umfasst.

2. Oberflächenverkleidung (100) nach dem Anspruch 1, wobei die Kanäle (200) an einer Außenfläche (120) der Oberflächenverkleidung (100) positioniert sind.

3. Oberflächenverkleidung (100) nach den Ansprüchen 1 oder 2, wobei die Kanäle (200) erste (210) und zweite Abschnitte (220) umfassen, die derart angeordnet sind, dass sie im Wesentlichen senkrecht zueinander sind und die vorzugsweise einander halbieren.

4. Oberflächenverkleidung (100) nach einem beliebigen der vorstehenden Ansprüche, wobei die Kanäle (200) in einer Breitenrichtung zwischen 2 mm und 20 mm aufweisen.

5. Oberflächenverkleidung (100) nach einem beliebigen der vorstehenden Ansprüche, wobei die Kanäle (200) in einer Tiefenrichtung zwischen 2 mm und 20 mm aufweisen.

6. Oberflächenverkleidung (100) nach einem beliebigen der vorstehenden Ansprüche, wobei die Kanäle (200) eine Oberflächenbeschaffenheit aufweisen, die das Erscheinungsbild von Kachelfugen vermittelt.

7. Oberflächenverkleidung (100) nach einem beliebigen der vorstehenden Ansprüche, wobei die Kanäle (200) angeordnet sind, um Kachelbereiche (130) zu definieren.

8. Oberflächenverkleidung (100) nach dem Anspruch 7, wobei die Kachelbereiche (130) eine Seitenlänge von 50 - 400 mm aufweisen und vorzugsweise im Wesentlichen quadratisch sind.

9. Oberflächenverkleidung (100) nach einem beliebigen der Ansprüche 7 oder 8, wobei die Kachelbereiche (130) eine Oberflächenbeschaffenheit aufweisen, die das Erscheinungsbild von Kacheln vermittelt.

10. Oberflächenverkleidung (100) nach einem beliebigen der vorstehenden Ansprüche, wobei die Kanäle (200) derart angeordnet sind, dass die Oberflächenverkleidung (100), wenn sie neben einer angrenzenden Oberflächenverkleidung (100) positioniert wird, das Erscheinungsbild einer durchgehend gekachelten Oberfläche vermittelt.

11. Oberflächenverkleidung (100) nach einem beliebigen der Ansprüche 7 bis 10, wobei die Kanäle (200) eine Oberflächenbeschaffenheit aufweisen, die sich von einer Oberflächenbeschaffenheit der Kachelbereiche (130) unterscheidet.

12. Verfahren zum Formen einer Oberflächenverkleidung (100), wobei das Verfahren Folgendes umfasst:
Vakuumformen eines auf Kunststoff basierenden Materials zum Einschließen einer Vielzahl an Kanälen (200), wobei die Kanäle (200) derart angeordnet sind, dass die Oberflächenverkleidung (100) ein gekacheltes Erscheinungsbild aufweist, und die Oberflächenverkleidung (100) weiterhin ein Befestigungsmittel (300) umfasst, das geeignet ist, um die Oberflächenverkleidung (100) an einer Wand oder anderem Trägermaterial zu befestigen, **dadurch gekennzeichnet, dass** das Befestigungsmittel (300) wenigstens einen auswärts hervorstehenden Vorsprung (112) umfasst und wobei die Oberflächenverkleidung aus einem stranggepressten Polyvinylchlorid hergestellt ist und einen feuerhemmenden Zusatzstoff umfasst.

13. Verfahren zum Formen einer Oberflächenverkleidung (100) nach dem Anspruch 12, wobei die zum Vakuumformen verwendete Gießform (400) von einem Abdruck geformt wird, der von einer Oberfläche, die gekachelt ist und Fugen aufweist, oder von einer äquivalenten Oberfläche, die ausgelegt ist, um eine gekachelte und Fugen aufweisende Oberfläche nachzubilden, genommen wurde.

14. Verfahren zum Verkleiden einer Oberfläche, wobei das Verfahren einen Schritt des Befestigens einer Oberflächenverkleidung (100) nach dem Anspruch 1 an der Oberfläche umfasst.

## Revendications

1. Revêtement de surface (100), le revêtement de surface (100) comprenant un matériau à base de plastique et une pluralité de canaux (200), les canaux (200) étant disposés de telle sorte que le revêtement de surface (100) présente un aspect carrelé, et le revêtement de surface (100) comprenant en outre des moyens de fixation (300) aptes à fixer le revêtement de surface (100) à une paroi ou un autre substrat, les moyens de fixation (300) comprenant au moins une saillie s'étendant vers l'extérieur (112), **caractérisé en ce que** le revêtement de surface est fabriqué à partir de PVC extrudé et comprend un additif ignifuge.

2. Revêtement de surface (100) selon la revendication 1, dans lequel les canaux (200) sont positionnés sur une surface extérieure (120) du revêtement de surface (100).

3. Revêtement de surface (100) selon les revendications 1 ou 2, dans lequel les canaux (200) comprennent des première (210) et seconde (220) parties qui sont disposées de manière à être sensiblement perpendiculaires l'une à l'autre et qui de préférence s'intersectent mutuellement.

4. Revêtement de surface (100) selon l'une quelconque des revendications précédentes, dans lequel les canaux (200) mesurent entre 2 mm et 20 mm dans le sens de la largeur.

5. Revêtement de surface (100) selon l'une quelconque des revendications précédentes, dans lequel les canaux (200) mesurent entre 2 mm et 20 mm dans le sens de la profondeur.

6. Revêtement de surface (100) selon l'une quelconque des revendications précédentes, dans lequel les canaux (200) comprennent une finition de surface qui donne l'aspect d'un joint de carrelage.

7. Revêtement de surface (100) selon l'une quelconque des revendications précédentes, dans lequel les canaux (200) sont prévus pour définir des régions de carrelage (130).

8. Revêtement de surface (100) selon la revendication 7, dans lequel les régions de carrelage (130) mesurent entre 50 et 400 mm de longueur latérale et sont de préférence sensiblement carrées.

9. Revêtement de surface (100) selon l'une quelconque des revendications 7 ou 8, dans lequel les régions de carrelage (130) comprennent une finition de surface qui donne l'aspect de carrelage.

10. Revêtement de surface (100) selon l'une quelconque des revendications précédentes, dans lequel les canaux (200) sont disposés de telle sorte que le revêtement de surface (100), lorsqu'il est positionné à côté d'un revêtement de surface adjacent (100), donne l'aspect d'une surface carrelée continue.

11. Revêtement de surface (100) selon l'une quelconque des revendications 7 à 10, dans lequel les canaux (200) comprennent une finition de surface qui est différente d'une finition de surface des régions de carrelage (130).

12. Procédé de formation d'un revêtement de surface (100), le procédé comprenant les étapes consistant à :
former sous vide un matériau à base de plastique de manière à ce qu'il comporte une pluralité de canaux (200), les canaux (200) étant disposés de telle sorte que le revêtement de surface (100) ait un aspect carrelé et le revêtement de surface (100) comprenant en outre des moyens de fixation (300) aptes à fixer le revêtement de surface (100) à une paroi ou un autre substrat, **caractérisé en ce que** les moyens de fixation (300) comprennent au moins une saillie s'étendant vers l'extérieur (112), et le revêtement de surface étant fabriqué à partir d'un PVC extrudé et comprenant un additif ignifuge.

13. Procédé de formation d'un revêtement de surface (100) selon la revendication 12, dans lequel le moule (400) utilisé pour le formage sous vide est formé à partir d'une empreinte prise à partir d'une surface qui est carrelée et jointoyée ou d'une surface équivalente configurée pour simuler une surface carrelée et jointoyée.

14. Procédé de revêtement d'une surface, le procédé comprenant une étape de fixation à la surface d'un revêtement de surface (100) selon la revendication 1.
